# EUROPÄISCHE PATENTSCHRIFT

(11) **EP 3 097 985 B1**
(45) Veröffentlichungstag und Bekanntmachung des Hinweises auf die Patenterteilung: **21.11.2018**
(21) Anmeldenummer: 15169826.3
(22) Anmeldetag: 29.05.2015
(51) Int. Cl.: B05B 15/60, F16H 25/16, B05B 15/652, B23Q 11/10, B24B 55/02

(54) **STELLEINRICHTUNG**
POSITIONING DEVICE
DISPOSITIF DE RÉGLAGE

(43) Veröffentlichungstag der Anmeldung: 30.11.2016
(73) Patentinhaber: Gerald Sebert GmbH, 74321 Bietigheim-Bissingen (DE)
(72) Erfinder: Sebert, Gerald, 74321 Bietigheim-Bissingen (DE)
(74) Vertreter: Patentanwälte Ruff, Wilhelm, Beier, Dauster & Partner mbB

(56) Entgegenhaltungen:
- EP-A1- 1 911 548
- EP-A1- 2 286 964
- DE-A1- 2 905 579
- US-A- 5 125 709

## Beschreibung

Die Erfindung betrifft eine Stelleinrichtung umfassend eine um eine zentrale Achse drehbar gelagerten Stellscheibe. Die Erfindung betrifft weiter eine Einrichtung zum gerichteten Leiten von Fertigungshilfsstoffen und/oder eine Greifereinrichtung mit einer Stelleinrichtung.

Es sind verschiedene Anwendungen bekannt, bei welchen mittels Rotation einer Stellscheibe um eine zentrale Achse mehrere über den Umfang der Stellscheibe verteilt angeordnete Elemente verstellt werden.

Beispielsweise ist aus EP 1 911 548 A1 eine Kühleinrichtung für eine Fräsmaschine oder dergleichen bekannt, welche eine Grundplatte und mehrere, an der Grundplatte verschwenkbar angebrachte Düsen umfasst. Für ein Verschwenken der Düsen sind eine statisch angeordnete kreisringförmige Führungsplatte mit sich in Radialrichtung erstreckenden ersten Führungsnuten für die Düsen und eine ebenfalls kreisringförmige Stellscheibe mit schräg zur Tangentialrichtung verlaufenden linearen zweiten Führungsnuten für die Düsen vorgesehen, wobei durch Verdrehen der Stellscheibe relativ zu der Führungsplatte die Düsen in den ersten Führungsnuten der Führungsplatte in Richtung einer zentralen Achse verschwenkt werden. Die zweiten Führungsnuten in der Stellscheibe verlaufen schräg zur Tangentialrichtung, sodass sich der Abstand eines Kontaktpunkts einer zweiten Führungsnut und der darin aufgenommenen Düse von der zentralen Achse bei Rotation des Stellscheibes verändert. Um ein Verkanten der Düsen in den Führungsnuten beim Verschwenken zu vermeiden und eine Verwendung dieser Stelleinrichtung überhaupt zu ermöglichen, müssen die Düsen mit ausreichend Spiel in den Schlitzen geführt werden. Zudem sind die Führungsnuten mit einer durchgehenden Fase oder einem Radius an einer von den Schwenkachsen der Düsen abgewandten Außenseite ausgebildet.

Aus EP 2 286 964 ist eine Greifvorrichtung mit verschieblich gelagerten Greifelementen bekannt, wobei die Greifelemente mit Bahneingriffselementen versehen sind, welche in linearen Führungsbahnen verschieblich gelagert. Für ein Verschieben der Greifelemente ist eine drehbare Stellscheibe mit Führungsnuten vorgesehen.

Aus DE 29 05 579 A1 ist eine Einrichtung zum gerichteten Leiten von Fertigungshilfsstoffen umfassend verschwenkar gelagerte Kugeldüsen bekannt, wobei für ein Verschwenken der Kugeldüsen eine Stellscheibe mit kurvenförmigen Ausnehmungen vorgesehen ist. Die Kugeldüsen sind mit Spiel mittels elastisch verformbarer Elemente in den Ausnehmungen gelagert.

### AUFGABE UND LÖSUNG

Es ist eine Aufgabe der vorliegenden Erfindung eine verbesserte Stelleinrichtung umfassend eine Stellscheibe zu schaffen. Es sind weitere Aufgaben der Erfindung, Vorrichtungen zu schaffen, in welchen die Stelleinrichtung einsetzbar ist.

Diese Aufgaben werden gelöst durch die Gegenstände mit den Merkmalen der Ansprüche 1, 7 und 12. Weitere vorteilhafte Ausgestaltungen ergeben sich aus den Unteransprüchen.

Gemäß einem ersten Aspekt wird eine Stelleinrichtung umfassend einen Grundkörper und eine um eine zentrale Achse drehbar an dem Grundkörper gelagerte Stellscheibe geschaffen, wobei die Stellscheibe mindestens zwei über den Umfang verteilt angeordnete Führungsnuten für an dem Grundkörper um tangentiale Schwenkachsen verschwenkbar gelagerte Stellobjekte aufweist, wobei Mittellinien der Führungsnuten sich jeweils entlang einer spiralförmigen Bahn um die zentrale Achse erstrecken.

Die in den Führungsnuten aufgenommenen Stellobjekte werden aufgrund der Berührung mit Wandungen der Führungsnuten beim Verdrehen der Stellscheibe schräggestellt.

Zur Berücksichtigung einer variierenden Schrägstellung der Stellobjekte bezüglich der zentralen Achse und eines damit einhergehenden veränderten Querschnitts der Stellobjekte in Kontakt mit den Führungsnuten variiert in einer Ausgestaltung eine Breite der Führungsnuten über einen Verlauf entlang der spiralförmigen Bahn. In anderen Worten sind die Führungsnuten in dieser Ausgestaltung derart gestaltet, dass sie die elliptische Schnittfläche eines zylinderförmigen Stellobjekts mit einer Ebene der Stellscheibe in der jeweiligen Schrägstellung des Stellobjekts abbilden. Die exakte Gestaltung der Führungsnuten ist durch den Fachmann je nach Anwendungsfall unter Berücksichtigung eines geforderten maximalen Stellwinkels, einer einzuhaltenden Präzision, einer Gestaltung der Stellobjekte etc. geeignet zu wählen. Die Führungsnuten weisen dabei in einer Ausgestaltung konvex geformte Wandungen auf.

In einer alternativen Ausgestaltung weisen Wandungen der Führungsnuten zur Berücksichtigung einer variierenden Schrägstellung der Stellobjekte bezüglich der zentralen Achse einen über einen Verlauf entlang der spiralförmigen Bahn kontinuierlich mit der Schrägstellung variierenden Neigungswinkel auf.

Die entlang einer spiralförmigen Bahn verlaufenden Führungsnuten, deren Wandungen einen kontinuierlich veränderlichen Neigungswinkel aufweisen, werden im Zusammenhang mit der Anmeldung auch als Wendelnuten bezeichnet. Die erfindungsgemäße Gestaltung der Führungsnuten als Wendelnuten ermöglicht eine präzise Stellbewegung der Stellobjekte ohne Verkanten bei einer Führung der Stellobjekte in den Führungsnuten mit einem geringen Spiel.

Die Stellobjekte werden mittels der Stelleinrichtung um tangentiale Schwenkachsen verschwenkt. Als tangentiale Schwenkachsen werden im Zusammenhang mit der Anmeldung Achsen bezeichnet, welche in einer Tangentialrichtung eines gedachten koaxial zu der zentralen Achse angeordneten Kreises liegen. Die Stellobjekte werden somit in Radialebenen zu der zentralen Achse verschwenkt. In einer Ausgestaltung ist vorgesehen, dass die Stellobjekte relativ zu der zentralen Achse in beliebige Richtung verschwenkbar in dem Grundkörper gelagert sind, wobei eine Bewegung mittels einer ortsfesten Führungsscheibe auf eine Verschwenkbewegung um tangentiale Schwenkachsen beschränkt ist.

In vorteilhaften Ausgestaltungen ist den Stellobjekten jeweils eine Lagerwelle zugeordnet und der Grundkörper weist Lageraufnahmen für die Stellobjekte auf, wobei die Stellobjekte mittels der Lagerwellen in den Lageraufnahmen um ortsfeste tangentiale Schwenkachsen schwenkbar gelagert sind. Dadurch ist eine einfache Gestaltung möglich. Die Lageraufnahmen sind von einer der Stellscheibe gegenüberliegenden Seite des Grundkörpers zugänglich, wobei eine Abdeckung zum Verschließen der Lageraufnahmen vorgesehen ist. In Richtung der Stellscheibe sind bei dieser Gestaltung Öffnungen in dem Grundkörper vorgesehen, durch welche die Stellobjekte geführt werden. Die Öffnungen sind vorzugsweise als sich in Radialrichtung zu der zentralen Achse erstreckende Nuten gestaltet, sodass die Öffnungen zusätzlich eine Führungsfunktion übernehmen. Es sind jedoch auch andere Gestaltungen denkbar. In anderen Ausgestaltungen weisen die Lageraufnahmen in Richtung der Stellscheibe, wobei die Stellscheibe auch die Funktion eines Abdeckelements für die Lageraufnahmen übernehmen kann.

Der Grundkörper weist in vorteilhaften Ausgestaltungen eine rotationssymmetrische Ausnehmung auf, wobei die Stellscheibe um die zentrale Achse drehbar in der Ausnehmung gelagert ist. Dadurch ist die Stelleinrichtung als kompakte Baugruppe mit einer geringen Bauhöhe gestaltbar.

In vorteilhaften Ausgestaltungen ist zur Abdeckung der Stellscheibe ein Deckelelement vorgesehen, wobei das Deckelelement sich in Radialrichtung von der zentralen Achse erstreckende Nuten aufweist. Die für die Stellscheibe vorgesehene Ausnehmung in dem Grundkörper ist in einer Ausgestaltung ausreichend tief dimensioniert, sodass das Deckelelement ebenfalls in die Ausnehmung einsetzbar ist. In anderen Ausgestaltungen ist das Deckelelement auf den Grundkörper aufgesetzt. Die Nuten erstrecken sich in Radialrichtung der zentralen Achse. In einer Ausgestaltung haben die Nuten eine Breite, welche in etwa dem Durchmesser der Stellobjekte entspricht, sodass die Nuten zusätzlich eine Führungsfunktion übernehmen. In anderen Ausgestaltungen sind die Nuten so dimensioniert, dass Stellobjekte mit großem Spiel durch die Nuten geführt sind und die Nuten keine Führungsfunktion für die Stellbewegung übernehmen. Dadurch werden ein Kontakt und aus dem Kontakt resultierende Verschleißerscheinungen vermieden.

Für eine Bewegung der Stellscheibe weist diese in einer Ausgestaltung an einem Außenumfang eine Verzahnung für einen Antrieb auf. Ein Antrieb ist dabei als motorischer Antrieb oder als Kurbel oder Stellrad für einen manuellen Antrieb gestaltbar.

In einer anderen Ausgestaltung weist die Stellscheibe ein koaxial zu der zentralen Achse angeordnetes Element, insbesondere einen sich in Richtung der zentralen Achse erstreckenden Schaft für einen Antrieb auf. Auch bei einer derartigen Gestaltung ist sowohl ein motorischer, insbesondere ein elektromotorischer Antrieb, oder ein manueller Antrieb möglich. Das Element, insbesondere der Schaft, ist je nach Anforderung einteilig mit der Stellscheibe gefertigt oder mit dieser drehfest verbunden. Eine Verbindung erfolgt in einer Ausgestaltung mittels geeigneter, zerstörungsfrei lösbarer Kopplungsmittel. In anderen Ausgestaltungen sind die Bauteile nicht zerstörungsfrei lösbar verbunden, beispielsweise verschweißt.

Die Stelleinrichtung ist in einer Vielzahl an Anwendungen geeignet einsetzbar.

Gemäß einem zweiten Aspekt der Erfindung wird eine Einrichtung zum gerichteten Leiten von Fertigungshilfsstoffen für eine Werkzeugmaschine geschaffen, welche mindestens zwei bewegliche Düsen und eine Stelleinrichtung für eine Stellbewegung der Düsen umfasst. Stellobjekte der Stelleinrichtung sind somit die beweglichen Düsen. Mittels der Stelleinrichtung ist es dabei möglich, die Düsen auf einen bestimmten Punkt, insbesondere eine Schneid- oder Eindringstelle eines Werkzeugs, wie eines Bohrers, eines Fräswerkzeugs, einer Schleifscheibe o.dgl., zu richten. Bei dem Fertigungshilfsstoff handelt es sich beispielsweise um Luft.

In vorteilhaften Ausgestaltungen sind die mindestens zwei Düsen als Kühlmitteldüsen gestaltet. Der Fertigungshilfsstoff ist dabei ein Kühlmittel, insbesondere eine Kühlflüssigkeit.

Die Düsen sind in einer Ausgestaltung in jeder Stellposition alle auf einen gemeinsamen Punkt gerichtet. In vorteilhaften Ausgestaltungen weisen die mindestens zwei Düsen der Einrichtung in jeder Stellposition voneinander abweichende Schrägstellungen bezüglich der zentralen Achse auf. Die Düsen sind somit nicht auf einen gemeinsamen Punkt gerichtet. Dies kann zur gezielten Kühlmittelzufuhr an zwei Stellen vorteilhaft sein. Beispielsweise ist es denkbar, ein Kühlmittel sowohl auf einen Bohrerspitze, als auch auf eine zweite Stelle des Bohrers zu richten. Bei einer Stellbewegung mittels der Stellscheibe werden die Düsen dabei in einer Ausgestaltung um gleiche Stellwinkel verstellt. In anderen Ausgestaltungen werden die Düsen durch entsprechende Gestaltungen der Führungsnoten um unterschiedliche Stellwinkel verstellt.

Vorzugsweise sind mehr als zwei Düsen vorgesehen sind, wobei zumindest ein Teil der Düsen gruppen- oder paarweise korrespondierende Schrägstellungen bezüglich der zentralen Achse aufweisen. Die Düsen sind somit gruppen- oder paarweise auf einen gemeinsamen Punkt, insbesondere eine Schneid- oder Eindringstelle gerichtet.

In vorteilhaften Ausgestaltungen weisen der Grundkörper und die Stellscheibe eine kreisring- oder kreisringsegmentförmige Grundform auf. Die Einrichtung kann um das Werkzeug angeordnet werden, wobei beispielsweise eine Werkzeugachse und die zentrale Achse der Stelleinrichtung koaxial angeordnet sind.

Gemäß einem dritten Aspekt wird eine Greifereinrichtung umfassend mindestens zwei bewegliche Finger und eine Stelleinrichtung für eine Stellbewegung der Finger geschaffen. Vorzugsweise weist die Greifereinrichtung drei oder vier Finger auf. Die Finger sind dabei die Stellobjekte der Stelleinrichtung, wobei durch Rotation der Stellscheibe die Finger zum Greifen eines Objektes aufeinander zu oder zum Freigeben des Objekts voneinander weg bewegt werden.

Die Finger sind vorzugsweise in jeder Stellposition mit korrespondierenden Schrägstellungen bezüglich der zentralen Achse angeordnet und die Führungsnuten der Stelleinrichtung kongruent gestaltet, sodass die Finger synchrone Stellbewegungen durchführen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die anhand der schematischen Figuren erläutert sind. Dabei zeigen:
- Fig. 1:: eine Stelleinrichtung in einer geschnittenen Seitenansicht;
- Fig. 2:: eine Stellscheibe für eine Stelleinrichtung gemäß Fig.1 in einer Draufsicht;
- Fig. 3:: die Stellscheibe ähnlich Fig. 2 in einer perspektivischen Darstellung;
- Fig. 4:: einen Teil der Stelleinrichtung gemäß Fig. 1 mit einem Stellobjekt in einer geschnittenen Seitenansicht;
- Fig. 5:: einen Teil einer Stelleinrichtung ähnlich Fig. 1 mit einem Stellobjekt in einer geschnittenen Seitenansicht;
- Fig. 6:: eine Einrichtung zum gerichteten Leiten von Fertigungshilfsstoffen für eine Werkzeugmaschine;
- Fig. 7:: eine Draufsicht auf die Einrichtung gemäß Fig. 6;
- Fig. 8:: einen Schnitt der Einrichtung gemäß Fig. 6 entlang einer Ebene VIII-VIII gemäß Fig. 6 in einer ersten Schrägstellung;
- Fig. 9:: einen Schnitt einer Einrichtung ähnlich Fig. 6 entlang einer Ebene VIII-VIII gemäß Fig. 6 in einer ersten Schrägstellung;
- Fig. 10:: einen Schnitt der Einrichtung gemäß Fig. 6 entlang einer Ebene VIII-VIII gemäß Fig. 6 in einer zweiten Schrägstellung;
- Fig. 11:: eine geschnittene Seitenansicht einer Greifereinrichtung mit einer Stelleinrichtung;
- Fig. 12:: eine Draufsicht auf einen Grundkörper der Stelleinrichtung gemäß Fig. 10 und
- Fig. 13:: eine Draufsicht auf eine Stellscheibe der Stelleinrichtung gemäß Fig. 10.

### DETAILLIERTE BESCHREIBUNG DER AUSFÜHRUNGSBEISPIELE

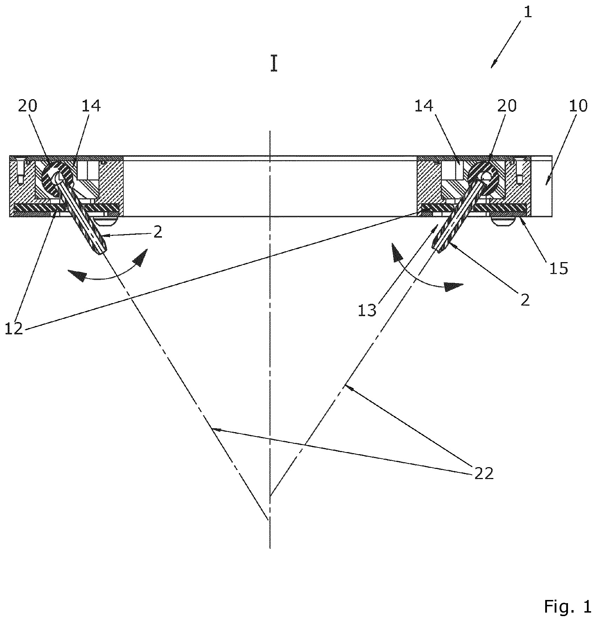

Fig. 1 zeigt schematisch eine Stelleinrichtung 1 umfassend einen Grundkörper 10 und eine um eine zentrale Achse I drehbar an dem Grundkörper 10 gelagerte Stellscheibe 12. Der Grundkörper 10 und die Stellscheibe 12 haben jeweils eine kreisringförmige Grundfläche. Der dargestellte Grundkörper 10 weist eine rotationssymmetrische, genauer eine kreisringförmige Ausnehmung 13 auf, in welcher die Stellscheibe 12 drehbar aufgenommen ist.

An dem Grundkörper 10 sind Stellobjekte 2 gelagert. Der Grundkörper 10 weist zu diesem Zweck an einer der Stellscheibe 12 gegenüberliegenden Seite Lageraufnahmen 14 auf. Den Stellobjekten 2 ist jeweils eine Lagerwelle 20 zugeordnet. Die Stellobjekte 2 sind - wie durch Pfeile angedeutet - mittels der Lagerwellen 20 in den Lageraufnahmen 14 um ortsfeste tangentiale Schwenkachsen schwenkbar gelagert. Die Lageraufnahmen 14 sind zum Einsetzen der Stellobjekte 2 von einer der Ausnehmung 13 gegenüberliegenden Seite zugänglich. In anderen Ausgestaltungen sind die Lageraufnahmen 14 in Richtung der Ausnehmung 13 offen, wobei die Stellscheibe 12 auch als Abdeckelement für die Lageraufnahmen 14 dient.

An einer von dem Grundkörper 10 abgewandten Seite der Stellscheibe 12 ist ein Deckelelement 15 vorgesehen.

Die Stellobjekte 2 weisen unterschiedliche Schrägstellungen bezüglich der zentralen Achse I auf, sodass die Stellobjekte 2 verlängernde Strahlen 22 auf unterschiedliche Punkte auf der zentralen Achse I gerichtet sind.

Durch Rotation der Stellscheibe 12 relativ zu dem Grundkörper 10 sind die Stellobjekte 2 um ihre Schwenkachsen verschwenkbar.

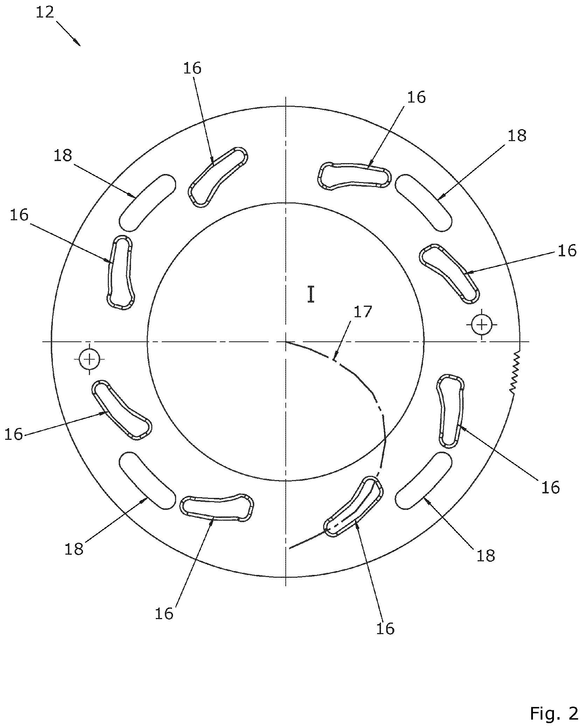

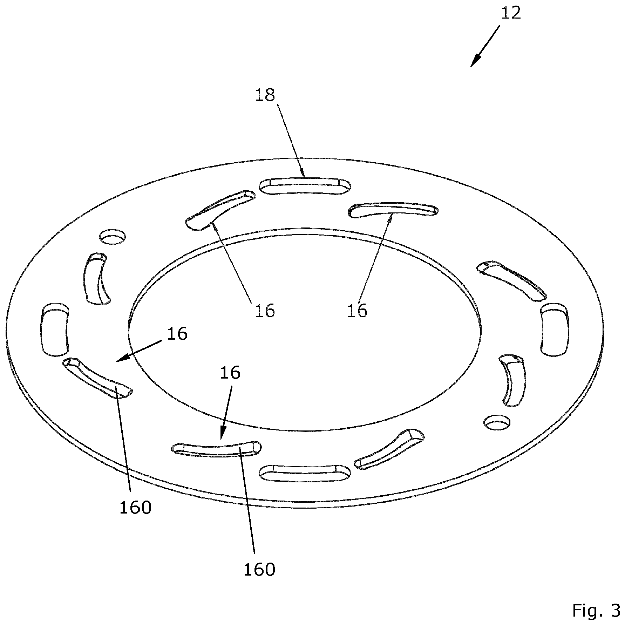

Fig. 2 zeigt eine Stellscheibe 12 für die Stelleinrichtung 1 gemäß Fig.1 in einer Draufsicht. Fig. 3 zeigt eine ähnliche Stellscheibe 12 in einer perspektivischen Darstellung. Die in den Figg. 2 und 3 dargestellten Stellscheiben 12 weisen jeweils acht über den Umfang verteilt angeordnete Führungsnuten 16 auf, deren Mittellinien sich jeweils entlang einer in Fig. 2 schematisch durch eine gestrichelte Linie dargestellten, spiralförmigen Bahn 17 um die zentrale Achse I erstrecken.

Die Stellscheiben 12 weisen weiter jeweils vier sich in Umfangsrichtung erstreckende Langlöcher 18 auf, welche zur drehbaren Befestigung der Stellscheibe 12 an dem Grundkörper 10 dienen.

Für eine möglichst spielfreie Führung der zylinderförmigen Stellobjekte ist in den in Fig. 2 und 3 dargestellten Ausführungsform der Stellscheiben 12 jeweils vorgesehen, dass eine Breite der Führungsnuten 16 in Radialrichtung variiert. Die Breite der Führungsnuten ist dabei jeweils an ein sich aus der Schrägstellung ergebendes, erforderliches Öffnungsmaß angepasst, wobei die Breite der Führungsnuten in Radialrichtung entsprechend des mit der Schrägstellung zunehmenden erforderlichen Öffnungsmaßes zunimmt. In anderen Worten nimmt die Breite der Führungsnuten in Radialrichtung mit der Entfernung zu der zentralen Achse ab. In dem dargestellten Ausführungsbeispiel soll eine Schrägstellung der Stellobjekte 2 mit Drehung gegen den Uhrzeigersinn vergrößert werden.

Bei der in Fig. 1 und 2 dargestellten Ausführungsform weisen die Führungsnuten 16 dabei jeweils konvex geformte Wandungen auf.

Bei der Ausführungsform gemäß Fig. 3 sind die Führungsnuten 16 als sogenannte Wendelnuten gestaltet. Wie in Fig. 3 erkennbar ist, weisen Wandungen dieser Wendelnuten zur Berücksichtigung einer variierenden Schrägstellung der Stellobjekte 2 (vgl. Fig. 1) bezüglich der zentralen Achse I einen über einen Verlauf entlang der spiralförmigen Bahn 17 kontinuierlich mit der Schrägstellung der Stellobjekte 2 variierenden Neigungswinkel auf.

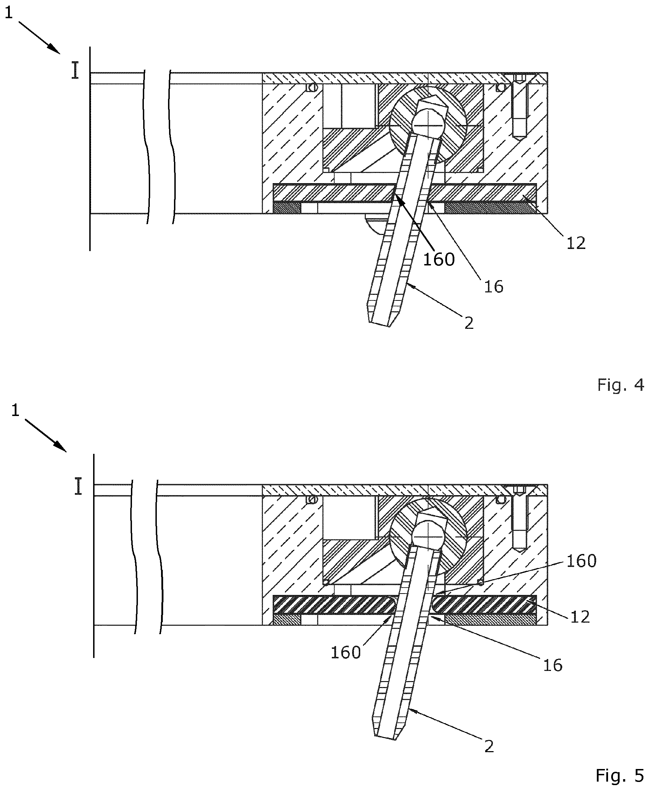

Fig. 4 zeigt einen Teil einer Stelleinrichtung 1 ähnlich Fig. 1 mit einer Stellscheibe 12 gemäß Fig. 3 und mit einem Stellobjekt 2 in einer geschnittenen Seitenansicht, wobei das Stellobjekt 2 durch Rotation der Stellscheibe 12 in eine Schrägstellung bezüglich der zentralen Achse I überführt ist. Wie in Fig. 4 erkennbar ist, berühren die Stellobjekte 2 die Wandungen 160 der Führungsnuten 16 entlang einer Linie. Durch Rotation der Stellscheibe 12 werden die Stellobjekte 2 in eine andere Schrägstellung bezüglich der zentralen Achse I überführt, wobei die Neigungswinkel der Wandungen 160 variieren, sodass die Stellobjekte 2 die Wandungen 160 der Führungsnuten 16 in jeder Schrägstellung entlang einer Linie berühren.

Fig. 5 zeigt einen Teil der Stelleinrichtung 1 gemäß Fig. 1 mit einer Stellscheibe 12 gemäß Fig. 2 und mit einem Stellobjekt 2 in einer geschnittenen Seitenansicht. Im Unterschied zu der Ausführungsform gemäß Fig. 4 sind die Wandungen 160 der Führungsnuten 16 nicht geneigt, sondern mit Radien versehen. Bei einem Verdrehen der Stellscheibe 12 läuft ein Anlagepunkt des Stellobjekts 2 an der Innenseite der Führungsnut auf einem vorgegebenen Radius entlang nach unten weg. Ein Anlagepunkt des Stellobjekts 2 an der Außenseite der Führungsnut läuft dagegen auf einem vorgegebenen Radius entlang nach oben weg.

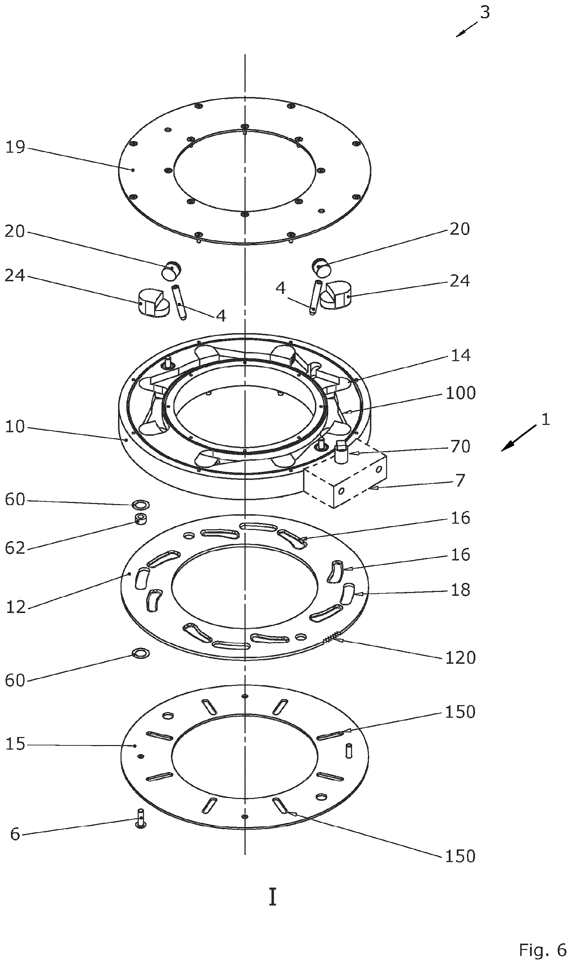

Fig. 6 zeigt in einer Explosionsdarstellung Teile einer Einrichtung 3 zum gerichteten Leiten von Fertigungshilfsstoffen für eine nicht dargestellte Werkzeugmaschine, genauer einer Einrichtung zur Kühlmittelzufuhr, umfassend mehrere, nämlich acht als Kühlmitteldüsen gestaltete Düsen 4 und eine Stelleinrichtung 1 mit einem Grundkörper 10 und einer Stellscheibe 12.

Die Düsen 4 sind mittels Lagerwellen 20 und Lagerabdeckungen 24 in Lageraufnahmen 14 in dem Grundkörper 10 über dessen Umfang verteilt angeordnet. Eine Kühlmittelzufuhr erfolgt über in den Grundkörper 10 eingearbeitete Kanäle 100. Zur Abdichtung sind mehrere nicht dargestellte O-Ringe und ein Abdeckelement 19 vorgesehen.

Zur Abdeckung der Stellscheibe 12 ist ein Deckelelement 15 vorgesehen, wobei das Deckelelement 15 sich in Radialrichtung von der zentralen Achse I erstreckende Nuten 150 für die als Düsen 4 gestalteten Stellobjekte aufweist. Das Deckelelement 15 und die Stellscheibe 12 sind mittels Schrauben 6, Unterlegscheiben 60 und Fixierhülsen 62 an dem Grundkörper 10 befestigt. Die Fixierhülsen 62 sind in den Langlöchern 18 der Stellscheibe 12 geführt, sodass die Stellscheibe 12 relativ zu dem Deckelelement 15 und dem Grundkörper 10 um die zentrale Achse verdrehbar ist.

Für eine Stellbewegung weist die Stellscheibe 12 an ihrem Außenumfang eine Außenverzahnung 120 auf, welche mit einem Antrieb 7 zusammenwirkt. In dem dargestellten Ausführungsbeispiel ist ein manueller Antrieb 7 vorgesehen, wobei mittels einer nicht dargestellten Kurbel oder dergleichen eine Antriebswelle 70 um ihre Achse verdreht werden kann. Die Antriebswelle 70 treibt ein nicht dargestelltes mit der Außenverzahnung 120 zusammenwirkendes Zahnrad an. Alternativ ist ein motorischer Antrieb der Antriebswelle 70 denkbar.

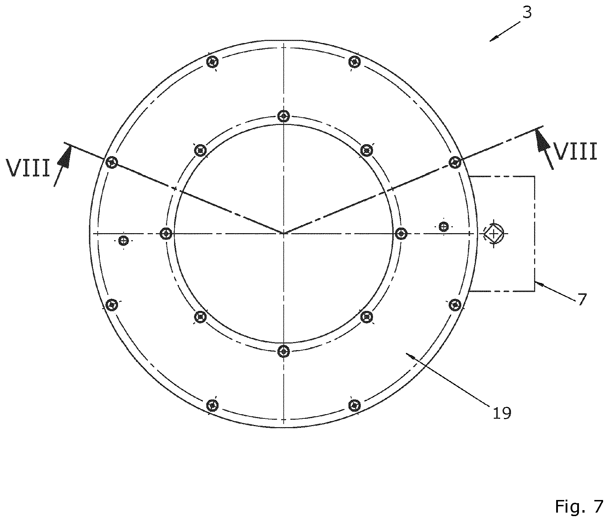

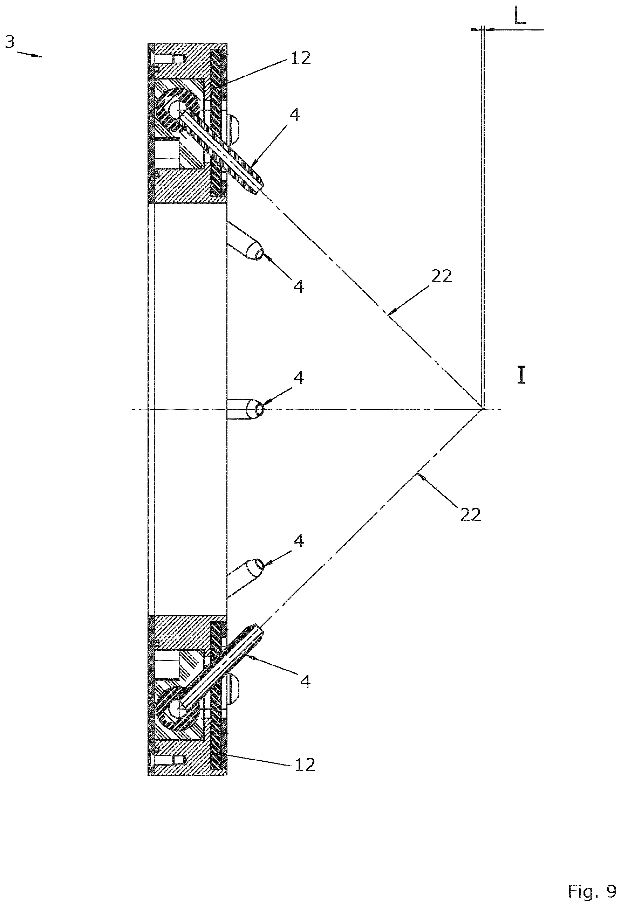

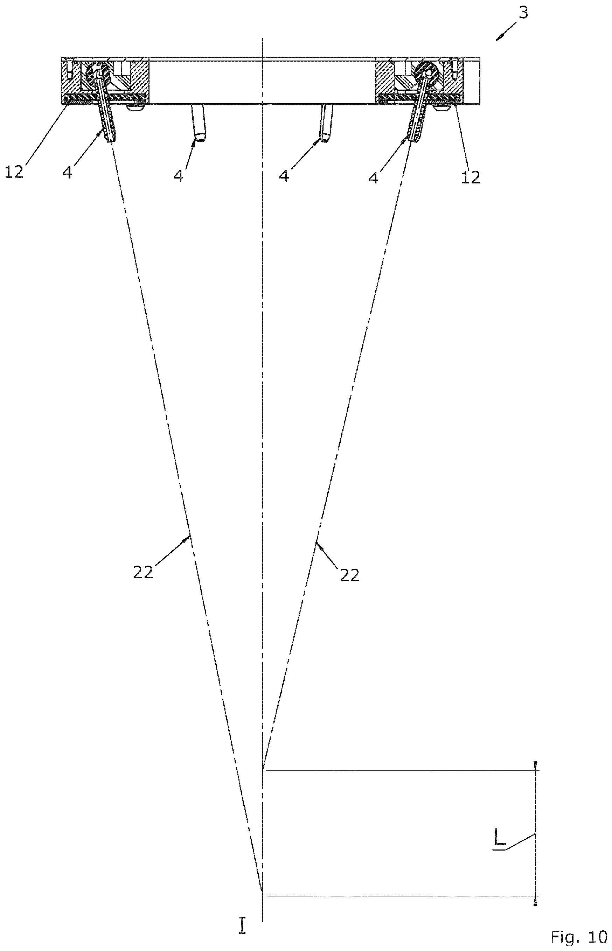

Fig. 7 zeigt eine Draufsicht auf die Einrichtung 3 gemäß Fig. 6 und die Figuren 8 und 10 zeigen Schnittdarstellungen der Einrichtung 3 gemäß Fig. 6 entlang einer Ebene VIII-VIII gemäß Fig. 6 bei zwei verschiedenen Schrägstellungen der Düsen 4, wobei eine Stellscheibe 12 gemäß Fig. 2 vorgesehen ist. Fig. 9 zeigt Schnittdarstellungen einer Einrichtung 3 ähnlich Fig. 6 entlang einer Ebene VIII-VIII gemäß Fig. 6, wobei eine Stellscheibe 12 gemäß Fig. 3 vorgesehen ist.

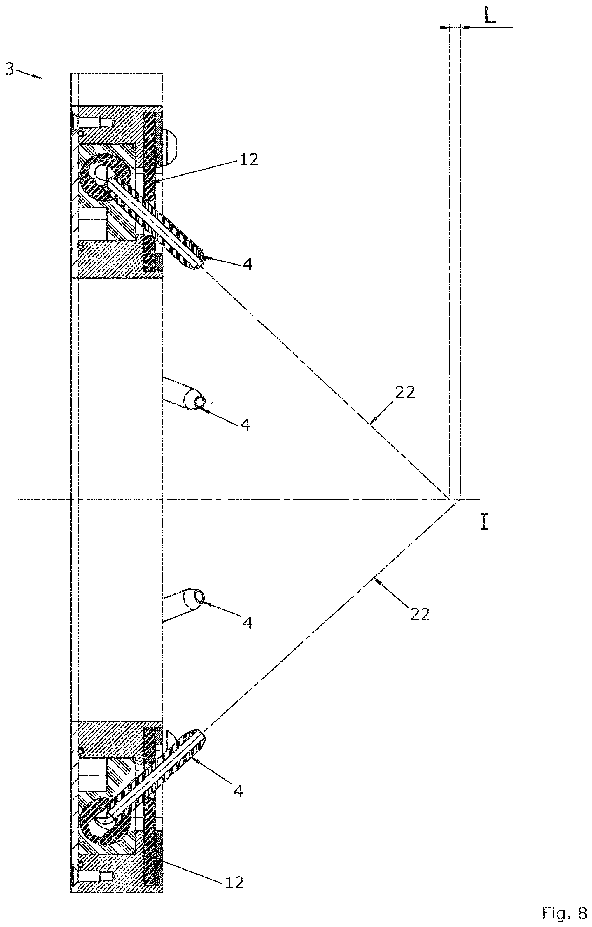

Wie in den Figuren 8 bis 10 erkennbar ist, weisen die Düsen 4 voneinander abweichende Winkel oder Schrägstellungen bezüglich der zentralen Achse I auf, so dass aus den Düsen 4 austretende Kühlmittelstrahlen 22 auf zwei unterschiedliche Punkte auf der zentralen Achse I gerichtet sind. Bei einer Veränderung der Schrägstellung der Düsen 4 durch Rotation der Stellscheibe 12 verändert sich der Abstand I zwischen den Schnittpunkten der Kühlmittelstrahlen 22 mit der zentralen Achse I entsprechend der trigonometrischen Formeln. Sofern weiter die Einrichtung 3 auch entlang der zentralen Achse I verschieblich an einer Werkzeugmaschine gelagert ist, ist eine nahezu grenzenlose Anpassung einer gerichteten Kühlmittelzufuhr an verschiedenste Anforderungen möglich.

Die kreisringförmige Grundform der Stelleinrichtung 1 ist lediglich beispielhaft. Andere Formen sind denkbar. Beispielsweise ist es auch denkbar, eine kreisringsegmentförmige Grundform vorzusehen, welche eine Annäherung der Einrichtung 3 an eine Werkzeugmaschine quer zu deren Werkzeugkopf erlaubt.

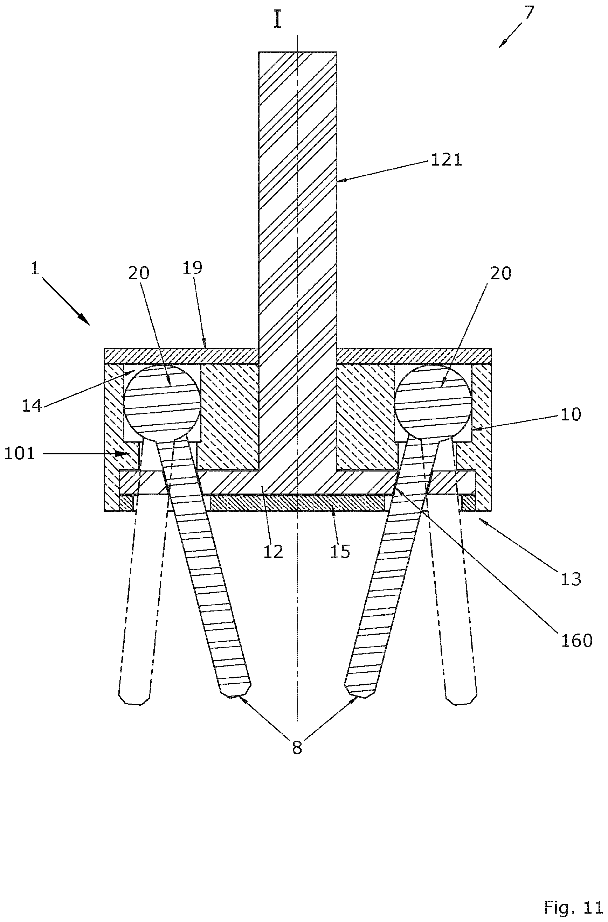

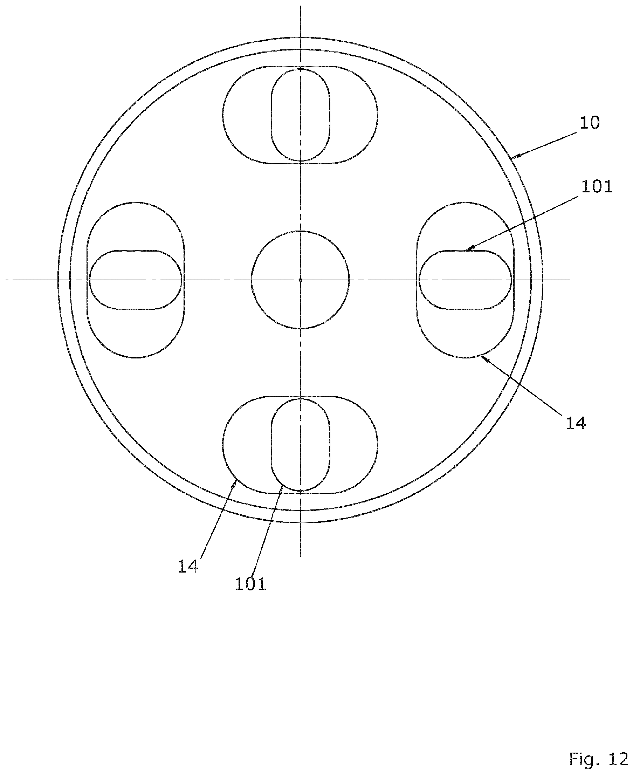

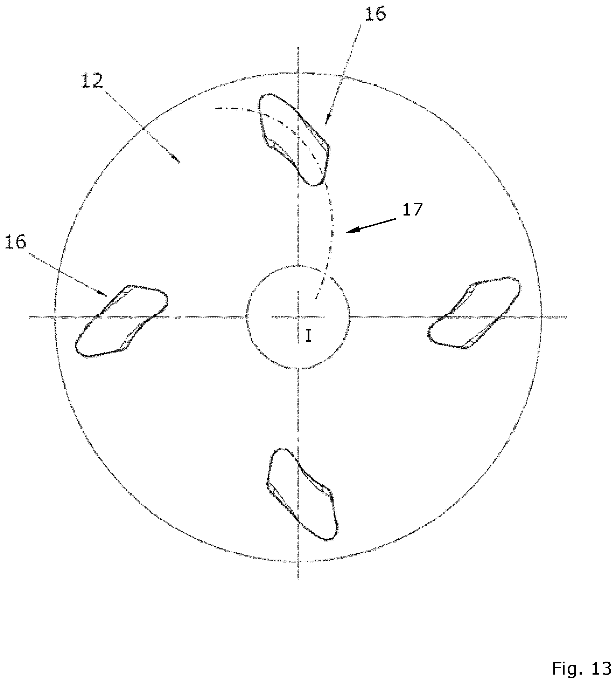

Die Figuren 11 bis 13 zeigen eine alternative Anwendung einer erfindungsgemäßen Stelleinrichtung 1 in einer Greifereinrichtung 7, wobei Fig. 11 eine geschnittene Seitenansicht der Greifereinrichtung 7, Fig. 12 eine Draufsicht auf einen Grundkörper 10 der zugehörigen Stelleinrichtung 1 und Fig. 13 eine Draufsicht auf eine Stellscheibe 12 der zugehörigen Stelleinrichtung 1 zeigt.

Stellobjekte der Stelleinrichtung 1 sind vier Finger 8, welche jeweils um eine tangentiale Schwenkachse verschwenkbar an dem Grundkörper 10 gelagert sind. Zu diesem Zweck weist jeder Finger 8 eine Lagerwelle 20 auf, welche in Lageraufnahmen 14 aufgenommen sind. Der Grundkörper 10 weist an einer der Stellscheibe 12 zugewandten Seite der Lageraufnahmen 14 Durchgangsöffnungen 101 auf, durch welche die Finger 8 geführt sind. In dem dargestellten Ausführungsbeispiel sind die Durchgangsöffnungen 101 als sich in Radialrichtung erstreckende Langlöcher gestaltet.

An einer den Lageraufnahmen 14 gegenüberliegenden Seite des Grundkörpers 10 ist eine Ausnehmung 13 vorgesehen, in welche die Stellscheibe 12 und ein Deckelelement 15 eingesetzt sind. Das Deckelelement 15 weist dabei ebenfalls Ausnehmungen für die Finger 8 auf. Diese sind, wie oben beschrieben, vorzugsweise als sich in Radialrichtung erstreckende Nuten gestaltet.

Wie in Fig. 13 erkennbar ist, weist die Stellscheibe 12 Führungsnuten 16 auf, deren Mittellinien sich entlang einer spiralförmigen Bahn 17 um die zentrale Achse I erstrecken.

Eine Breite der Führungsnuten 16 in Radialrichtung ist zur Kompensation eines erforderlichen Öffnungsmaßes aufgrund einer variierenden Schrägstellung der Finger 8 bezüglich der zentralen Achse variiert. Dabei ist, wie in Fig. 11 erkennbar, ein Verschwenken der Finger 8 aus einer parallel zur zentralen Achse I ausgerichteten Nullstellung in beide Richtungen vorgesehen. Die Breite der Nuten 16 nimmt daher jeweils zu den Enden zu, sodass die Finger 8 in jeder Schrägstellung zumindest im Wesentlichen spielfrei in den Führungsnuten 16 geführt sind.

Zur Berücksichtigung einer variierenden Schrägstellung der Stellobjekte 2 bezüglich der zentralen Achse I weisen Wandungen 160 der Führungsnuten 16 einen über einen Verlauf entlang der spiralförmigen Bahn 17 kontinuierlich mit der Schrägstellung variierenden Neigungswinkel auf, sodass die Stellobjekte 2 - wie in Fig. 11 erkennbar - die Führungsnuten 16 entlang einer Linie berühren. In anderen Ausgestaltungen weisen die Wandungen 160 Radien auf.

Die Finger 8 weisen korrespondierende Schrägstellungen bezüglich der zentralen Achse I auf, d.h. die Finger 8 sind alle auf einen gemeinsamen Punkt auf der zentralen Achse I gerichtet. Für eine Einleitung einer Stellbewegung der Finger 8 weist die Stellscheibe 12 einen Schaft 121 auf, welcher mit einem nicht dargestellten Antrieb koppelbar ist. Es sind jedoch auch andere Antriebe, beispielsweise mittels der oben beschriebenen Außenverzahnung o.dgl. denkbar.

## Patentansprüche

1. Stelleinrichtung umfassend einen Grundkörper (10) und eine um eine zentrale Achse (I) drehbar an dem Grundkörper (10) gelagerte Stellscheibe (12), wobei die Stellscheibe (12) mindestens zwei über den Umfang verteilt angeordnete Führungsnuten (16) für an dem Grundkörper (10) um tangentiale Schwenkachsen verschwenkbar gelagerte Stellobjekte (2) aufweist, und wobei Mittellinien der Führungsnuten (16) sich jeweils entlang einer spiralförmigen Bahn (17) um die zentrale Achse (I) erstrecken, **dadurch gekennzeichnet, dass** zur Berücksichtigung einer variierenden Schrägstellung der Stellobjekte (2) bezüglich der zentralen Achse (I)
- eine Breite der Führungsnuten (16) über einen Verlauf entlang der spiralförmigen Bahn (17) variiert und/oder
- Wandungen (160) der Führungsnuten (16) einen über einen Verlauf entlang der spiralförmigen Bahn (17) kontinuierlich mit der Schrägstellung variierenden Neigungswinkel aufweisen.

2. Stelleinrichtung nach Anspruch 1, **dadurch gekennzeichnet, dass** den Stellobjekten (2) jeweils eine Lagerwelle (20) zugeordnet ist und der Grundkörper (10) Lageraufnahmen (14) für die Stellobjekte (2) aufweist, wobei die Stellobjekte (2) mittels der Lagerwellen (20) in den Lageraufnahmen (14) um ortsfeste tangentiale Schwenkachsen schwenkbar gelagert sind.

3. Stelleinrichtung nach Anspruch 1 oder 2, **dadurch gekennzeichnet, dass** der Grundkörper (10) eine rotationssymmetrische Ausnehmung (13) aufweist, wobei die Stellscheibe (12) um die zentrale Achse (I) drehbar in der rotationssymmetrischen Ausnehmung (13) gelagert ist.

4. Stelleinrichtung nach einem der Ansprüche 1 bis 3, **dadurch gekennzeichnet, dass** ein Deckelelement (15) zur Abdeckung der Stellscheibe (12) vorgesehen ist, wobei das Deckelelement (15) sich in Radialrichtung von der zentralen Achse (I) erstreckende Nuten (150) aufweist.

5. Stelleinrichtung nach einem der Ansprüche 1 bis 4, **dadurch gekennzeichnet, dass** die Stellscheibe (12) an einem Außenumfang eine Verzahnung (120) für einen Antrieb aufweist.

6. Stelleinrichtung nach einem der Ansprüche 1 bis 5, **dadurch gekennzeichnet, dass** die Stellscheibe (12) ein koaxial zu der zentralen Achse angeordnetes Element, insbesondere einen Schaft (121), für einen Antrieb aufweist.

7. Einrichtung zum gerichteten Leiten von Fertigungshilfsstoffen für eine Werkzeugmaschine umfassend mindestens zwei bewegliche Düsen (4) und eine Stelleinrichtung (1) nach einem der Ansprüche 1 bis 6 für eine Stellbewegung der Düsen (4).

8. Einrichtung nach Anspruch 7, **dadurch gekennzeichnet, dass** die mindestens zwei Düsen (4) als Kühlmitteldüsen gestaltet sind.

9. Einrichtung nach Anspruch 7 oder 8, **dadurch gekennzeichnet, dass** die mindestens zwei Düsen (4) in jeder Stellposition voneinander abweichende Schrägstellungen bezüglich der zentralen Achse (I) aufweisen.

10. Einrichtung nach Anspruch 7, 8 oder 9, **dadurch gekennzeichnet, dass** mehr als zwei Düsen (4) vorgesehen sind, wobei zumindest ein Teil der Düsen (4) gruppen- oder paarweise in jeder Stellposition korrespondierende Schrägstellungen bezüglich der zentralen Achse (I) aufweisen.

11. Einrichtung nach einem der Ansprüche 8 bis 10, **dadurch gekennzeichnet, dass** der Grundkörper (10) und die Stellscheibe (12) eine kreisring- oder kreisringsegmentförmige Grundform aufweisen.

12. Greifereinrichtung umfassend mindestens zwei bewegliche Finger (8) und eine Stelleinrichtung (1) nach einem der Ansprüche 1 bis 6 für eine Stellbewegung der Finger (8).

13. Greifereinrichtung nach Anspruch 12, **dadurch gekennzeichnet, dass** drei, vier oder mehr Finger (8) vorgesehen sind, wobei vorzugsweise die Finger (8) in jeder Stellposition korrespondierende Schrägstellungen bezüglich der zentralen Achse aufweisen.

## Claims

1. Adjusting device comprising a basic body (10) and an adjustment plate (12) mounted on the basic body (10) so as to be rotatable about a central axis (I), wherein the adjustment plate (12) has at least two guide slots (16), arranged in a manner distributed around the circumference, for adjustment objects (2) mounted on the basic body (10) so as to be pivotable about tangential pivot axes, and wherein centrelines of the guide slots (16) each extend about the central axis (I) along a spiral path (17), **characterized in that** in order to take a varying inclined position of the adjustment objects (2) with regard to the central axis (I) into account,
- a width of the guide slots (16) varies over a course along the spiral path (17) and/or
- walls (160) of the guide slots (16) have an inclination angle that varies continuously with the inclined position over a course along the spiral path (17).

2. Adjusting device according to claim 1, **characterized in that** a bearing shaft (20) is assigned to each of the adjustment objects (2) and the basic body (10) has bearing receptacles (14) for the adjustment objects (2), wherein the adjustment objects (2) are mounted in the bearing receptacles (14) by means of the bearing shafts (20) so as to be pivotable about positionally fixed tangential pivot axes.

3. Adjusting device according to claim 1 or 2, **characterized in that** the basic body (10) has a rotationally symmetrical cutout (13), wherein the adjustment plate (12) is mounted in the rotationally symmetrical cutout (13) so as to be rotatable about the central axis (I).

4. Adjusting device according to any of claims 1 to 3, **characterized in that** a cover element (15) for covering the adjustment plate (12) is provided, wherein the cover element (15) has slots (150) that extend in the radial direction from the central axis (I).

5. Adjusting device according to any of claims 1 to 4, **characterized in that** the adjustment plate (12) has, on an outer circumference, a toothing (120) for a drive.

6. Adjusting device according to any of claims 1 to 5, **characterized in that** the adjustment plate (12) has an element arranged coaxially with the central axis, in particular a shaft (121), for a drive.

7. Device for directing manufacturing aids for a machine tool, comprising at least two movable nozzles (4) and an adjusting device (1) according to any of claims 1 to 6 for an adjusting movement of the nozzles (4).

8. Device according to claim 7, **characterized in that** the at least two nozzles (4) are in the form of coolant nozzles.

9. Device according to claim 7 or 8, **characterized in that** the at least two nozzles (4) have inclined positions with regard to the central axis (I) that differ from one another in each adjusting position.

10. Device according to claim 7, 8 or 9, **characterized in that** more than two nozzles (4) are provided, wherein at least some of the nozzles (4) have inclined positions with regard to the central axis (I) that correspond in groups or pairs in each adjusting position.

11. Device according to any of claims 8 to 10, **characterized in that** the basic body (10) and the adjustment plate (12) have a basic shape in the form of a circular ring or circular ring segment.

12. Gripper device, comprising at least two movable fingers (8) and an adjusting device (1) according to any of claims 1 to 6 for an adjusting movement of the fingers (8).

13. Gripper device according to claim 12, **characterized in that** three, four or more fingers (8) are provided, wherein preferably the fingers (8) have inclined positions with regard to the central axis that correspond in each adjusting position.

## Revendications

1. Dispositif de réglage comprenant un corps de base (10) et un disque de réglage (12) monté sur le corps de base (10) de façon rotative autour d'un axe central (I), dans lequel le disque de réglage (12) présente au moins deux rainures de guidage (16) disposées de façon répartie sur la périphérie pour des objets de réglage (2) montés sur le corps de base (10) de façon pivotante autour d'axes de pivotement tangentiels, et dans lequel des lignes centrales de rainures de guidage (16) s'étendent respectivement le long d'un tracé en forme de spirale (17) autour de l'axe central (I), **caractérisé en ce que**, pour tenir compte d'une position oblique variable des objets de réglage (2) par rapport à l'axe central (I):
- une largeur des rainures de guidage (16) varie sur un trajet le long du tracé en forme de spirale (17) et/ou
- des parois (160) des rainures de guidage (16) présentent un angle d'inclinaison variable sur un trajet le long du tracé en forme de spirale (17) de façon continue avec la position oblique.

2. Dispositif de réglage selon la revendication 1, **caractérisé en ce qu'**un arbre de palier (20) est associé respectivement aux objets de réglage (2) et le corps de base (10) présente des logements de palier (14) pour les objets de réglage (2), dans lequel les objets de réglage (2) sont montés de façon pivotante autour d'axes de pivotements tangentiels stationnaires dans les logements de palier (14) au moyen des arbres de palier (20).

3. Dispositif de réglage selon la revendication 1 ou 2, **caractérisé en ce que** le corps de base (10) présente un évidement à symétrie de rotation (13), dans lequel le disque de réglage (12) est monté dans l'évidement à symétrie de rotation (13) de façon rotative autour de l'axe central (I).

4. Dispositif de réglage selon l'une quelconque des revendications 1 à 3, **caractérisé en ce qu'**il est prévu un élément de couvercle (15) pour recouvrir le disque de réglage (12), dans lequel l'élément de couvercle (15) présente des rainures (150) s'étendant en direction radiale à partir de l'axe central (I).

5. Dispositif de réglage selon l'une quelconque des revendications 1 à 4, **caractérisé en ce que** le disque de réglage (12) présente à une périphérie extérieure une denture (120) en vue d'un entraînement.

6. Dispositif de réglage selon l'une quelconque des revendications 1 à 5, **caractérisé en ce que** le disque de réglage (12) présente un élément disposé de façon coaxiale à l'axe central, en particulier un arbre (121), en vue d'un entraînement.

7. Dispositif pour le guidage orienté de matières consommables de fabrication pour une machine-outil comprenant au moins deux buses mobiles (4) et un dispositif de réglage (1) selon l'une quelconque des revendications 1 à 6 pour un mouvement de réglage des buses (4).

8. Dispositif selon la revendication 7, **caractérisé en ce que** lesdites au moins deux buses (4) sont des buses d'agent de refroidissement.

9. Dispositif selon la revendication 7 ou 8, **caractérisé en ce que** lesdites au moins deux buses (4) présentent dans chaque position de réglage des positions obliques différentes l'une de l'autre par rapport à l'axe central (I).

10. Dispositif selon la revendication 7, 8 ou 9, **caractérisé en ce qu'**il est prévu plus de deux buses (4), dans lequel au moins une partie des buses (4) présentent dans chaque position de réglage des positions obliques correspondantes par groupes ou par paires par rapport à l'axe central (I).

11. Dispositif selon l'une quelconque des revendications 8 à 10, **caractérisé en ce que** le corps de base (10) et le disque de réglage (12) présentent une forme de base en forme d'anneau circulaire ou de segment d'anneau circulaire.

12. Dispositif de saisie comprenant au moins deux doigts mobiles (8) et un dispositif de réglage (1) selon l'une quelconque des revendications 1 à 6 pour un mouvement de réglage des doigts (8).

13. Dispositif de saisie selon la revendication 12, **caractérisé en ce qu'**il est prévu trois, quatre doigts (8), ou davantage, dans lequel les doigts (8) présentent de préférence dans chaque position de réglage des positions obliques correspondantes par rapport à l'axe central.
